**Europäisches Patentamt**

**European Patent Office**

**Office européen des brevets**

(19)

(11) Veröffentlichungsnummer : **0 347 364 B1**

# EUROPÄISCHE PATENTSCHRIFT

(12)

(45) Veröffentlichungstag der Patentschrift :
03.04.91 Patentblatt 91/14

(51) Int. Cl.$^5$ : **E03F 3/06, F16L 11/02**

(21) Anmeldenummer : **89710052.5**

(22) Anmeldetag : **08.06.89**

(54) Verfahren zur Herstellung eines Schlauches zur Innenauskleidung für Abwasserkanalrohre.

(30) Priorität : **09.06.88 DE 3819657**

(43) Veröffentlichungstag der Anmeldung :
**20.12.89 Patentblatt 89/51**

(45) Bekanntmachung des Hinweises auf die
Patenterteilung :
**03.04.91 Patentblatt 91/14**

(84) Benannte Vertragsstaaten :
**AT BE CH DE ES FR GB IT LI NL SE**

(56) Entgegenhaltungen :
**EP-A- 0 184 366**
**WO-A-83/00006**
**WO-A-83/02748**
**DE-A- 3 017 870**
**DE-A- 3 028 979**

(73) Patentinhaber : **SAERBECK-TEXTIL
WAGENER GmbH & CO. KG.
Industriestrasse 11
W-4401 Saerbeck (DE)**

(72) Erfinder : **Wagener, Gert
Neubrückenstrasse 43
W-4407 Emsdetten (DE)**

(74) Vertreter : **Habbel, Hans-Georg, Dipl.-Ing.
Postfach 3429 Am Kanonengraben 11
W-4400 Münster (DE)**

EP 0 347 364 B1

Jouve, 18, rue Saint-Denis, 75001 PARIS

## Beschreibung

Die Erfindung bezieht sich auf ein Verfahren zur Herstellung einer Innenauskleidung für Abwasserkanalrohre mit einem Schlauch aus kunststoffgetränktem Filz, und die Erfindung bezieht sich weiterhin auf ein Verfahren zur Innenauskleidung von Abwasserkanalrohren mit einem aus kunststoffgetränktem Filz bestehenden Schlauch.

In jüngster Zeit tritt in der Praxis das Problem auf, daß erkannt wird, daß auch aus Beton, Keramik oder Ton od. dgl. bestehende Abwasserkanalrohre durch korrosive Medien in ihrer Beständigkeit erheblich beeinträchtigt werden. Hierbei treten porositäten im Abwasserkanal auf und teilweise ist auch die dadurch bedingte Schwächung der Rohrwand Grund für eine mangelnde statische Festigkeit.

Man hat dieses problem dadurch zu lösen versucht, daß man in einem Torkretierverfahren an die Innenwand des zu sanierenden Abwasserkanalabschnittes neuen Zement oder Beton aufbringt, ggf. gemischt mit entsprechenden Kunststoffen. Diese Verfahren sind aufwendig und für viele Einsatzzwecke nicht einsetzbar, da die erforderliche statische Verfestigung des Rohres und die erforderliche Abdichtung der porosität nicht erreicht wird.

Es ist daher bereits auch schon vorgeschlagen worden (DE-OS 36 41 324), in zu sanierende Abwasserkanalrohre einen Schlauch aus polyesterfilz einzuziehen. Bei diesem bekannten Verfahren tritt das problem auf, daß polyester nicht ausreichend säurebeständig ist und daß das Aushärten des polyesterharzes in dem in das Abwasserkanalrohr eingebrachten polyesterfilzschlauch nur sehr aufwendig möglich ist, nämlich durch Einsatz von einem heißen Innendorn, beispielsweise einem Innendorn aus einem Heißwasserschlauch. Durch diese Arbeitsweise ist das bekannte Verfahren zu arbeitsaufwendig und vor allen Dingen zu zeitraubend.

Der Erfindung liegt die Aufgabe zugrunde, ein Verfahren zur Herstellung einer Innenauskleidung für Abwasserkanalrohre zu schaffen, wobei die Innenauskleidung in der Lage ist, die erforderliche Abdichtung und statische Aussteifung des Rohres zu erreichen und gleichzeitig säurebeständig ist.

Die gestellte Aufgabe wird gelöst durch ein Verfahren mit den kennzeichnenden Merkmalen des Anspruches 1.

In den Unteransprüchen 2 bis 9 sind vorteilhafte Ausgestaltungen des Verfahrens nach Anspruch 1 angegeben.

Im Anspruch 10 ist ein Verfahren zum Auskleiden von Abwasserkanalrohren mit den hergestellten Schläuchen angegeben.

Mit anderen Worten ausgedrückt, schlägt die Erfindung vor, auf eine Gewebe- oder Gewirkebahn aus Glasfaserfäden eine aus Glasfasern aufgebaute Filzmatte aufzulegen, diese Filzmatte mit der Gewebe-oder Gewirkebahn zu verbinden, die Randbereiche der so gebildeten Kombinationsbahn zu schäften und dann aus dieser Kombinationsbahn einen Schlauch zu formen, wobei die Randbereiche der Kombinationsbahn im geschäfteten Bereich miteinander verbunden werden.

Die Verbindung in diesem Bereich kann durch Vernähen oder Verfilzen erfolgen. Während der Vorschlag des Vernähens den Nachteil hat, daß hier Unebenheiten in diesem Verbindungsbereich bedingt werden können, hat der Vorschlag des Verfilzens den Vorteil, daß eine dichte, aber sehr glatte Verbindung der beiden sich überlappenden Randbereiche erzielt wird.

Der so erzielte Schlauch weist also auf seiner Außenseite eine Gewebe- oder Gewirkebahn auf und auf der Innenseite liegt die Filzoberfläche offen. Für viele Einsatzbereiche ist diese Ausbildung ausreichend und um dann eine sehr glatte Oberfläche an der Filzaußenfläche, die gleichzeitig die Innenfläche des Schlauches definiert, zu erreichen, wird vorgeschlagen, daß die Gewebe- oder Gewirkebahn mit der Filzbahn nur kaschiert wird.

Wird auch eine hohe Abriebsfestigkeit im Inneren des Schlauches verlangt, wird gemäß einem weiteren Vorschlag der Erfindung vorgesehen, daß auf die auf die Gewebe- oder Gewirkebahn aufgelegte Filzbahn eine zusätzliche Gewebe- oder Gewirkebahn oder auch Vliesbahn aufgebracht wird, die natürlich ebenfalls aus Glasfasern besteht. Hierbei wird dann vorgesehen, daß diese Bahnen mit der Filzmatte in Nähwirktechnik miteinander verbunden werden.

Um die erforderliche Zugfestigkeit beim Einziehen des Schlauches in das Abwasserkanalrohr zu erreichen, wird weiterhin gemäß der Erfindung vorgesehen, unabhängig ob sich die Auskleidung aus drei oder nur zwei Schichten zusammensetzt, zwischen die äußere Gewebe- oder Gewirkebahn und die darunterliegende Filzmatte sogenannte unidirektionale Rovings oder Glasgarne einzuziehen, die also in Längsachse des zu bildenden Schlauches verlaufen und damit die erforderliche Zugfestigkeit beim Einziehen des Schlauches in das Abwasserkanalrohr schaffen.

Um mit einer so aufgebauten Innenauskleidung ein Abwasserkanalrohr zu sanieren, wird vorgeschlagen, daß der gebildete Schlauch, der sich vollständig aus Glasfasern aufbaut, in das Abwasserkanalrohr eingezogen wird, an die Innenwand des Abwasserkanalrohres angelegt wird und daß dann eine Aushärtung des mit polyesterharz getränkten Schlauches durch Ultraviolett-Strahlen erfolgt, indem einfach durch den gebildeten Schlauch eine entsprechende Strahlenquelle gezogen wird. Diese Arbeitsweise ist natürlich wesentlich weniger aufwendig als die bisher bekannten Arbeitsweisen und in überraschender Weise wird einerseits sowohl die ausreichende Korrosionsfestigkeit, andererseits aber auch die notwendige statische Festigkeit erreicht, so daß mit dem erfindungsgemäßen Verfahren und der erfindungsgemäßen Innenauskleidung alle heute bei Abwasserkanalrohren bestehenden Sanierungsprobleme gelöst werden können.

Während im voraufgehenden allgemein u. a. von einer Gewirkebahn gesprochen wurde, kann es von besonderem Vorteil sein, daß diese Gewirkebahn als Nähgewirkebahn ausgebildet ist.

Während im voraufgehenden allgemein von einer Filzmatte gesprochen wird, erscheint es von besonderem Vorteil, wenn diese Filzmatte aus einem Nadelfilz aufgebaut ist.

## Ansprüche

1. Verfahren zur Herstellung eines Schlauches aus kunststoffgetränktem Filz zur Innenauskleidung von Abwasserkanalrohren, insbesondere aus Beton, Keramik oder Ton, dadurch gekennzeichnet, daß auf eine aus Glasfaserfäden gebildete Gewebe- oder Gewirkebahn eine aus Glasfasern gebildete Filzmatte aufgelegt und die Bahn mit der Matte verbunden wird, dann die derart gebildete Kombinationsbahn zu einem Schlauch geformt und an den geschäfteten Kombinationsbahnrändern miteinander verbunden wird.

2. Verfahren nach Anspruch 1, dadurch gekennzeichnet, daß auf die auf der Gewebe- oder Gewirkebahn aufliegende Filzmatte zusätzlich eine Gewebe- oder Gewirkebahn oder Vliesbahn aus Glasfasern aufgelegt wird.

3. Verfahren nach Anspruch 1, dadurch gekennzeichnet, daß die Gewebe- oder Gewirkebahn und die Filzmatte durch Kaschieren verbunden werden.

4. Verfahren nach Anspruch 1 oder 2, dadurch gekennzeichnet, daß die Gewebe- oder Gewirkebahn, die Filzmatte und die die Filzmatte abdeckende Gewebe- oder Gewirkebahn oder Vliesbahn in Nähwirktechnik verbunden werden.

5. Verfahren nach einem oder mehreren der voraufgehenden Ansprüche, dadurch gekennzeichnet, daß die geschäfteten Bahnränder durch Vernähen verbunden werden

6. Verfahren nach einem oder mehreren der voraufgehenden Ansprüche 1 bis 4, dadurch gekennzeichnet, daß die geschäfteten Bahnränder durch Verfilzen verbunden werden.

7. Verfahren nach einem oder mehreren der voraufgehenden Ansprüche, dadurch gekennzeichnet, daß zwischen die Gewebe- oder Gewirkebahn und die auf diese aufgelegte Filzmatte unidirektionaler Glasgarne oder Rovings aufgelegt werden, die in Längsachse des zu bildenden Schlauches verlaufen.

8. Verfahren nach einem oder mehreren der voraufgehenden Ansprüche, dadurch gekennzeichnet, daß eine Gewirkebahn eingesetzt wird, die in Nähwirktechnik hergestellt ist.

9. Verfahren nach einem oder mehreren der voraufgehenden Ansprüche, dadurch gekennzeichnet, daß eine Filzmatte eingesetzt wird, die als Nadelfilzmatte ausgebildet ist.

10. Verfahren zur Innenauskleidung von Abwasserkanalrohren mit einem Schlauch gemäß Anspruch 1 bis 5, dadurch gekennzeichnet, daß der Schlauch in das zu sanierende Abwasserkanalrohr eingezogen, dicht an die Abwasserkanalrohrinnenwand angelegt und dann durch UV-Bestrahlung ausgehärtet wird.

## Claims

1. A method of producing a tube of plastics impregnated felt for internally lining sewer pipes, especially of concrete, ceramic material or clay, characterized in that a felt mat formed of glass fibres is laid on a woven or knitted web formed of glass fibre threads and the web is connected with the mat, then the combination web formed in this way is formed into a tube and connected together at the abutting combination web edges.

2. A method according to claim 1, characterized in that in addition a woven or knitted web or a non-woven web of glass fibres is laid onto the felt mat lying on the woven or knitted web.

3. A method according to claim 1, characterized in that the woven or knitted web and the felt mat are connected by pasting.

4. A method according to claim 1 or claim 2, characterized in that the woven or knitted web, the felt mat and the woven or knitted web or non-woven web covering the felt mat are connected by stitch-bonding technology.

5. A method according to one or more of the preceding claims, characterized in that the abutting web edges are connected by sewing.

6. A method according to one or more of the preceding claims 1 to 4, characterized in that the abutting web edges are connected by felting together

7. A method according to one or more of the preceding claims, characterized in that between the woven or knitted web and the felt mat laid thereon there are laid unidirectional glass fibre yarns or rovings, which run along the longitudinal axis of the tube to be formed.

8. A method according to one or more of the preceding claims, characterized in that a knitted web is used which is produced by stitch-bonding technology.

9. A method according to one or more of the preceding claims, characterized in that a felt mat is used which is constructed as needled felt mat.

10. A method for internally lining sewer pipes with a tube according to claims 1 to 5, characterized in that the tube is inserted into the sewer pipe to be renewed, tightly applied against the inner wall of the sewer pipe and then hardened by UV radiation.

## Revendications

1. Procédé de fabrication d'un manchon en feutre imprégné de matière plastique, pour le revêtement intérieur de tuyaux de canalisations d'égout, en particulier en béton, céramique ou terre cuite, caractérisé en ce qu'on applique un matelas feutré composé de fibres de verre sur une bande de tissu ou de tricot composée de fils de fibres de verre, et qu'on assemble la bande au matelas, puis on met la bande combinée ainsi formée à la forme d'un manchon et on réunit l'un à l'autre les bords de la bande combinée préalablement munis d'entures.

2. Procédé selon la revendication 1, caractérisé en ce qu'une bande de tissu, de tricot ou de non tissé en fibres de verre est appliquée en supplément sur le matelas feutré appliqué sur la bande de tissu ou de tricot.

3. Procédé selon la revendication 1, caractérisé en ce que la bande de tissu ou de tricot et le matelas feutré sont assemblés par doublage.

4. Procédé selon la revendication 1 ou 2, caractérisé en ce que la bande de tissu ou de tricot, le matelas feutré et la bande de tissu ou de tricot ou de non tissé qui recouvre le matelas feutré sont assemblés par le procédé Malimo.

5. Procédé selon une ou plusieurs des revendications précédentes, caractérisé en ce que les bords de la bande préalablement munis d'entures sont assemblés par couture.

6. Procédé selon une ou plusieurs des revendications 1 à 4, caractérisé en ce que les bords de la bande préalablement munis d'entures sont assemblés par feutrage.

7. Procédé selon une ou plusieurs des revendications précédentes, caractérisé en ce qu'on pose entre la bande de tissu ou de tricot et le matelas feutré appliqué sur cette bande, des fils ou mèches de verre unidirectionnelles qui s'étendent selon l'axe longitudinal du manchon à former.

8. Procédé selon une ou plusieurs des revendications précédentes, caractérisé en ce qu'on utilise une bande de tricot qui est fabriquée par le procédé Malimo.

9. Procédé selon une ou plusieurs des revendications précédentes, caractérisé en ce qu'on utilise un matelas feutré qui est constitué par un matelas feutré aiguilleté.

10. Procédé de revêtement intérieur de tuyaux de canalisations d'égout comprenant un manchon selon l'une des revendications 1 à 5, caractérisé en ce que le manchon est emmanché dans le tuyau de canalisation d'égout qu'il s'agit de réparer, appliqué étroitement contre la paroi intérieure du tuyau de canalisation d'égout puis durci par irradiation aux rayons UV.